# EUROPÄISCHE PATENTSCHRIFT

(11) **EP 3 241 009 B1**
(45) Veröffentlichungstag und Bekanntmachung des Hinweises auf die Patenterteilung: **09.01.2019**
(21) Anmeldenummer: 15786895.1
(22) Anmeldetag: 21.10.2015
(51) Int. Cl.: G01M 5/00, G01M 17/10

(54) **VERSATZERFASSUNG ZWISCHEN GEFÜGTEN BAUTEILEN**
OFFSET DETECTION BETWEEN JOINED COMPONENTS
DÉTECTION DE DÉCALAGE ENTRE DES COMPOSANTS ASSEMBLÉS

(30) Priorität: 29.12.2014 DE 102014227016; 11.05.2015 DE 102015208723
(43) Veröffentlichungstag der Anmeldung: 08.11.2017
(73) Patentinhaber: Harting It Software Development GmbH & Co. Kg, 32339 Espelkamp (DE)
(72) Erfinder: TERENTSCHENKO, Paul, 32312 Lübbecke (DE); WERMKE, Rene, 30880 Laatzen (DE)
(74) Vertreter: Eisenführ Speiser
(86) Internationale Anmeldenummer: PCT/EP2015/074381
(87) Internationale Veröffentlichungsnummer: WO 2016/107683

(56) Entgegenhaltungen:
- EP-A1- 2 392 905
- EP-A2- 1 942 318
- DE-A1-102012 006 155
- GB-A- 2 275 533
- US-A1- 2005 223 812
- US-A1- 2009 231 097

## Beschreibung

Die Erfindung betrifft eine Vorrichtung, ein System und ein Verfahren zur Erfassung eines Versatzes zwischen zwei gefügten, insbesondere pressgefügten, Bauteilen im Betrieb der Bauteile sowie eine Verwendung eines RFID-Transponders zur Erfassung eines Versatzes zwischen zwei gefügten, insbesondere pressgefügten, Bauteilen im Betrieb der Bauteile.

In den Bereichen Energieerzeugung, Verkehrstechnik, Verfahrenstechnik sind Konstruktionen im Einsatz, die Beispiele klassischer Möglichkeiten von nicht-lösbaren/lösbaren Verbindungselementen wie Schrumpf-, Schweiß-, Löt-, Klebe-, Bolzen-, Spannelement-, Schraubverbindungen etc. zeigen. Diese können bei Versagen zu kapitalintensiven aber auch sicherheitsrelevanten Ausfallerscheinungen führen. Insbesondere im Bereich des Personenverkehrs auf Schienenfahrzeugen sind Szenarien vorstellbar, die bei Einzelversagen von Verbindungselementen auch zu katastrophalen Situationen bis hin zu Entgleisungen mit Personenschäden führen können.

In derartigen oder vergleichbaren Fällen wird daher nach Ansätzen gesucht, die erlauben, während des laufenden Betriebs von Maschinen und Fahrzeugen eine eindeutige Absicherung der mechanischen Integrität zu erfassen und signalisieren.

Eine der Erfindung zugrunde liegende Problematik wird im Folgenden anhand eines Beispiels aus der Verkehrstechnik erläutert.

Es geht hierbei um ein Verfahren und eine Vorrichtung zur Erkennung von dauerhaften Verdrehungen, wie sie an Rädern von Schienenfahrzeugen auftreten können. Dies kann den Bereich zwischen einer als Nabenkörper ausgebildeten Radscheibe eines Schienenfahrzeugs und einer Welle eines Radsatzes aber auch die Kopplung zwischen Radscheibe und Radreifen betreffen. In beiden Fällen sind die Bauteile gegeneinander mit einem Presssitz verbunden.

Bei Eisenbahntriebfahrzeugen kommt der Überwachung der Radsätze eine große Bedeutung zu, um kritische Zustände rechtzeitig erkennen zu können und geeignete Gegenmaßnahmen zu ergreifen. So ist es beispielsweise wichtig, Verdrehungen in Pressverbänden zu erkennen, da es im Falle einer Verdrehung und gleichzeitig auftretenden Spurführungskräften zu axialen Verschiebungen kommen kann: Damit verändert sich das Spur-Maß des betroffenen Radsatzes, so dass die Entgleisungssicherheit des Fahrzeugs nicht mehr gewährleistet ist.

Hier besteht also ein Bedarf dahingehend, im laufenden Betrieb eines Schienenfahrzeugs zu detektieren, ob innerhalb der zu überwachenden Welle-Nabe-Verbindung von Radsatzwelle und Radscheibe bzw. zwischen Radscheibe und Radreifen eine (insbesondere) dauerhafte Verdrehung aufgetreten ist.

In anderem Zusammenhang bzw. in anderen technischen Anwendungen neben der Erkennung von Verdrehungen bestehen ähnliche Problematiken auch beim Nachweis von lateralen Verschiebungen, so dass die vorliegende Erfindung auch hierauf gerichtet sein kann. Dies schließt auch Rissentwicklungen ein.

In der Praxis werden zurzeit beispielsweise Verdrehungen in der Welle-Nabe-Verbindung eines Eisenbahnradsatzes nur im Stillstand des Fahrzeugs mittels einer Sichtprüfung erkannt: Hierzu werden in Umfangsrichtung Markierungen an der Trennfuge zwischen Welle und Nabe angebracht. Im Ursprungszustand ist diese Markierung fluchtend, nach einer Verdrehung tritt ein Versatz zwischen den Markierungen auf. Mit diesem Verfahren kann eine Zustandsveränderung des Radsatzes frühestens nach Beendigung der Fahrt, während der dieser Schaden aufgetreten ist, erkannt werden. Somit besteht für Fahrten nach dem Auftreten der Verdrehung bis zur optischen Inspektion ein potentiell gefährlicher Zustand.

Zur Ermittlung der Umdrehungsgeschwindigkeit von rotierenden Körpern sind mehrere Verfahren bekannt. Alle beruhen darauf, dass Trigger-Markierungen auf dem rotierenden Körper aufgebracht sind, die bei Vorbeilauf an einem feststehenden Bezugspunkt ein Sensorsignal auslösen. Je nach Anzahl und Art der aufgebrachten Trigger-Markierungen kann neben der Umdrehungsgeschwindigkeit auch der jeweils aktuelle Drehwinkel erkannt werden.

Werden mit diesen Verfahren sowohl die Umdrehungsgeschwindigkeit der Welle wie auch der Nabe gemessen, kann zwar ein auftretender Unterschied in den Umdrehungsgeschwindigkeiten festgestellt werden, eine dauerhafte Verdrehung der Nabe auf der Welle kann jedoch nicht erkannt werden, da die Verdrehung eine momentane Erscheinung ist: Nach der Verdrehung sitzt die Nabe wieder fest auf der Welle und beide Bauteile drehen sich anschließend mit identischer Drehzahl.

Aus der AT 15 268 E ist ein Verfahren zum Erkennen von Änderungen der relativen Winkelposition zwischen den Stahllaufringen an den Rädern eines Schienenfahrzeugrad-Paares mit zwei an den Enden einer Achse befestigten Rädern bekannt, bei dem jeder Laufring mit einem magnetischen Muster versehen ist, welches mittels Sensoren abgetastet wird. Durch Vergleich der Sensorsignale in einem Komparator wird die relative Winkelbeziehung zwischen beiden Laufringen bestimmt. Die Verdrehung einer Radscheibe gegenüber einer Radwelle ist auf diese Weise allerdings nicht eindeutig erkennbar.

Weiterhin sind Verfahren bekannt (z.B. DE 102 19 057 A1), bei denen über die Messung der Phasenverschiebung zweier Messscheiben auf derselben Welle jeweils das aktuell auftretende Torsionsmoment in dieser Welle berechnet werden kann. Mit dieser Anwendung ist ebenfalls keine Erkennung einer dauerhaften Verdrehung zwischen zwei Bauteilen möglich, da es sich ausschließlich auf eine Welle beschränkt.

Die WO 2011/029526 A1 beschreibt einen Radsatz eines Schienenfahrzeugs mit zwei in Achsrichtung zueinander montierten Sensoren, wobei jeder Sensor ein alternierendes Signalmuster hervorruft. Ein Komparator vergleicht beide Sensorsignale und erzeugt einen Alarm sobald die Abweichung beider Sensorsignale einen vorgegebenen Grenzwert überschreitet. Dieses Verfahren dient zur Überwachung der Radsatzwelle als solcher.

In der DE 10 2011 113 844 B3 wird eine Erfindung vorgestellt, in der ein Phasenwinkel zwischen der Radscheibe und der Radsatzwelle über das Auslösen eines an einem Lagergehäuse befestigten Sensors durch einen auf der Radscheibe festgelegten Messpunkt sowie das Auslösen eines ebenfalls am Lagergehäuse befestigten Sensors durch einen auf der Radsatzwelle befestigten Messpunkt in zwei Drehrichtungen berechnet und wird mit einem bei Inbetriebnahme kalibrierten Phasenwinkel verglichen wird und durch ein Rechengerät bei einer aufgetretenen Verdrehung ein Warnsignal ausgegeben wird.

Eine reine Risserkennung in Radquerschnitten ist Gegenstand der DE 198 39 596 C2. In jedem Rad sind Bruchsensoren angeordnet, die mit einem Sender im Rad in Verbindung stehen und über einen Empfänger am Drehgestell ein Signal an den Triebkopf leiten und eine optische oder akustische Warnung auslösen. Die Bruchsensoren bestehen aus leitfähigem, bruchempfindlichem jedoch erschütterungsunempfindlichem Material, sind stabförmig ausgeführt und in eingeformten Kanälen in der Radscheibe mit Harz fixiert. Jede Rissbildung im Rad oder Radreifen bewirkt einen Bruch des Stabes und damit eine Unterbrechung der Signalübertragung. Dies erkennt ein zugeordneter Signalempfänger und sendet ein codiertes Signal wie oben beschrieben zum Triebkopf.

US 2009/0231097 A1 sieht Systeme und Verfahren zum Erfassen eines binären Zustands einer Vorrichtung vor. Ein Verfahren zum Erfassen eines Betriebszustandes einer Vorrichtung unter Verwendung eines RFID-Tags ist vorgesehen. Das Verfahren umfasst ein Koppeln eines ersten Teils des RFID-Tags an einem ersten Abschnitt der Vorrichtung und ein Koppeln eines zweiten Abschnitts des RFID-Tags an einem zweiten Abschnitt der Vorrichtung, wobei der erste Abschnitt der Vorrichtung hinsichtlich des zweiten Abschnitts der Vorrichtung beweglich ist, ein Ändern einer Position des ersten Abschnitts der Vorrichtung hinsichtlich einer Position des zweiten Abschnitts der Vorrichtung, ein Erfassen der Änderung der Position des ersten Vorrichtungsabschnitts auf Basis der Bewegung des ersten RFID-Tag Abschnitts, wobei die Bewegung eine Veränderung in einem Zustand eines RFID-Signals verursacht, das durch das RFID-Tag emittiert wird und Bestimmen des Status der Vorrichtung auf Basis der Änderung in dem RFID-Signalstatus.

Ziel der Erfindung ist es, eine Vorrichtung, ein System und ein Verfahren zur Erfassung eines Versatzes zwischen zwei gefügten, insbesondere pressgefügten, Bauteilen im Betrieb der Bauteile sowie eine Verwendung eines RFID-Transponders zur Erfassung eines Versatzes zwischen zwei gefügten, insbesondere pressgefügten, Bauteilen im Betrieb der Bauteile bereitzustellen, so dass ein eventueller Versatz in verlässlicher Weise (sowohl hinsichtlich von falsch-positiven als auch falsch-negativen Fehlangaben) mit möglichst effizientem Mitteleinsatz (insbesondere geringen Kosten) auch im Betrieb erfasst werden kann.

Ein Aspekt der Erfindung sieht hierzu eine Vorrichtung zur Erfassung eines Versatzes zwischen zwei gefügten, insbesondere pressgefügten, Bauteilen im Betrieb der Bauteile vor, wie sie in Anspruch 1 definiert ist.

Ein anderer Aspekt der Erfindung sieht ein System zur Überwachung eines Versatzes zwischen zwei gefügten, insbesondere pressgefügten, Bauteilen im Betrieb der Bauteile vor, mit wenigstens einer erfindungsgemäßen Vorrichtung zur Erfassung des Versatzes, einer Empfangseinheit, die ausgestaltet ist, einen von der Übermittlungseinheit einer Vorrichtung kontaktlos übermittelten Zustand der Kopplung und/oder ein von der Übermittlungseinheit einer Vorrichtung kontaktlos übermitteltes Maß der Kopplung zu empfangen und ein entsprechendes Signal auszugeben, und einer Auswerteeinheit, die ausgestaltet ist, auf Basis eines von der Empfangseinheit ausgegebenen Signals eine Bewertung des Versatzes zwischen den Bauteilen vorzunehmen.

Ein weiterer Aspekt der Erfindung sieht ein Verfahren zur Erfassung eines Versatzes zwischen zwei gefügten, insbesondere pressgefügten, Bauteilen im Betrieb der Bauteile vor, wie sie in Anspruch 12 definiert ist.

Die Erfindung sieht vor, dass die Messung des Versatzes zwischen den Bauteilen durch eine Messung zwischen an den Bauteilen angebrachten Elementen ermöglicht wird. Insofern wird nicht der Versatz der Bauteile selbst sondern der durch den Versatz der Bauteile verursachte Versatz zwischen den gekoppelten Elementen (oder Bestandteilen des RFID-Transponders) gemessen bzw. erfasst.

Eine der Erfindung zugrunde liegende Überlegung besteht darin, in allgemeiner Form einen Nachweis von aufgetretenen und dauerhaften Verdrehungen / Verschiebungen o.ä. zwischen Verbindungselementen zu ermöglichen, jedoch mit einem besonders kostengünstigen Ansatz. Hierbei kann angenommen werden, dass die Überwachung an einer Vielzahl von baugleichen Komponenten zu erfolgen hat. Die Überwachung erfolgt vorzugsweise mithilfe eines passiven Funk-Sensors, etwa basierend auf der RFID-Technologie (radio frequency identification).

Ein Vorteil der Erfindung besteht hierbei auch darin, dass eine aufwendige Kontaktierung, z.B. über Laufringe, zwischen einem rotierenden Bauteil und einem feststehenden Bauteil zur Datenübertragung entfällt.

In einer Ausführungsform der Erfindung umfasst die Übermittlungseinheit einen passiven RFID-Transponder zur kontaktlosen Übermittlung.

Eine Nutzung der RFID-Technologie zur kontaktlosen Übermittlung erlaubt es einerseits, auf bekannte Lösungen zur Übermittlung zuzugreifen, die hohe Anforderungen hinsichtlich Verlässlichkeit und Kostengünstigkeit erfüllen, wobei andererseits auch bekannte Lösungen zum Empfang verwendet werden können, die einfach in den Betrieb integriert werden können.

Die Erfindung sieht vor, dass die Kopplung zwischen dem ersten und zweiten Element eine elektrische Leitung umfasst, die für eine Unterbrechung durch einen Versatz, der über ein vorbestimmtes Maß hinausgeht, ausgestaltet ist.

Die elektrische Leitung kann hinsichtlich des Vorliegens der Unterbrechung, die den als unzulässig oder übermäßig angesehenen Versatz anzeigt, in einfacher Weise überprüft werden. So kann beispielsweise die fragliche elektrische Leitung selbst Teil eines Schaltkreises der Übermittlungseinheit sein, so dass ein Leitungsbruch die Übermittlungseinheit selbst außer Funktion setzt. Eine fehlende Rückantwort auf eine Anfrage an die Erfassungsvorrichtung kann dann als Zeichen für einen Versatz angesehen werden, der über das vorbestimmte Maß hinausgeht. Andererseits ist es auch möglich, dass die Unterbrechung der Leitung einen Schaltkreis erst in Funktionsbereitschaft bringt, so dass auch das Vorliegen einer Reaktion auf eine Anfrage als Indiz für den übermäßigen Versatz angesehen werden kann. Der elektrische Schluss durch die oder die Unterbrechung der Leitung kann aber auch durch eine entsprechende Schaltung und/oder Logik in der Vorrichtung selbst geprüft werden, so dass der entsprechende Zustand von der Übermittlungseinheit ausgegeben werden kann.

In einer Ausgestaltung umfasst die Kopplung mehrere elektrische Leitungen, die jeweils für eine Unterbrechung bei einem Versatz, der über ein unterschiedliches zugehöriges Maß hinausgeht, ausgestaltet sind.

Bei Nutzung verschiedener, jeweils unterschiedlich empfindlicher Leitungen, die vorzugsweise parallel geschaltet sind, können Abstufungen des Versatzes bestimmt werden, die eine frühzeitige Reaktion und/oder die Entwicklung einer Versatztendenz erlauben.

Es ist bei den zuvor erläuterten Leitungen möglich, dass der Versatz (bzw. dessen Überschreiten einer Grenze) die Leitung selbst zerstört (z.B. zerreißt), so dass die Unterbrechung permanent ist. Es ist aber auch von der Erfindung erfasst, dass die Unterbrechung lediglich insofern temporär ist, als dass bei einer Rückstellung des Versatzes (zumindest unterhalb eines Grenzwertes) die Leitungsteile wieder zusammengeführt und die Unterbrechung damit beseitigt wird. Die Leitung kann hierbei als reversibler Schalter angesehen werden.

Bei einer Nutzung einer elektrischen Leitung sind verschiedene Ausführungsformen realisierbar: Neben einer Ausführung als elektrischer Leitungsdraht können auch angepasste leitende Bleche genutzt werden, die Vorteile bei einer Montage, bei der Reproduzierbarkeit der Unterbrechungsfunktion und in einer eindeutigen Reaktion bereits bei kleinsten Verdrehwinkeln bzw. Versätzen aufweisen.

Erfindungsgemäß ist eine Konstruktion mit einer geometrisch ausgeprägten Einschnürung vorgesehen, die als Bruchstelle dient. Die flächige Form der Blechausführung begünstigt dabei große Klebeflächen, die sicherstellen, dass bei einem Versatz auftretende Scherkräfte eindeutig über die genannte Bruchstelle geleitet werden und damit gezielt die Unterbrechungsfunktion auslösen.

Die Vorteile der Nutzung eines Bleches im Rahmen der elektrischen Leitung lassen sich am besten realisieren, wenn eine exakte Blechbearbeitung mit vorzugsweise räumlicher Ausrichtung auf die an beiden Bauteilen vorliegenden Oberflächenkonturen vorgenommen wird. Ferner ist, bei Nutzung einer Klebung des Bleches an die Bauteile, eine geeignete mechanisch/chemische Vorbereitung der Klebeflächen von Bedeutung für die Langzeitstabilität der Indikator-Befestigung in Form des Bleches.

Ergänzend zum obigen Fall der elektrischen Leitung, die für eine Unterbrechung durch einen Versatz, der über ein vorbestimmtes Maß hinausgeht, ausgestaltet ist, kann die Kopplung elektrische Leitungsteile aufweisen, die durch einen Versatz, der über ein vorbestimmtes Maß hinausgeht, miteinander in Kontakt bringbar sind.

Bei diesem Ansatz gelten die obigen Überlegungen zur Leitungsunterbrechung entsprechend.

In einer weiteren Ausgestaltung umfasst die Kopplung drei oder mehr elektrische Leitungsteile, von denen mindestens zwei durch einen Versatz, der über ein vorbestimmtes Maß hinausgeht, miteinander in Kontakt bringbar sind.

Hierbei ist eine Vielzahl von Möglichkeiten gegeben, die Leitungsteile miteinander zu kombinieren. So kann beispielsweise auf einem Element ein Kontakt als Leitungsteil vorgesehen sein, der bei einem entsprechenden Versatz eine Position einnimmt, bei der durch den Kontakt eine Verbindung zwischen zwei Leitungsteilen des anderen Elements hergestellt wird. Eine andere Möglichkeit besteht darin, dass ein Element mit einem Leitungsteil versehen ist, dem auf dem anderen Element eine Vielzahl von einzelnen Leitungsteilen gegenüberliegen, so dass bei unterschiedlichem Versatz (oder auch keinem Versatz) jeweils eine elektrische Leitung von dem einen Leitungsteil und einem bestimmten Leitungsteil des anderen Elements gebildet wird.

Die Ansätze des Unterbrechens einer elektrischen Leitung und des Schließens einer elektrischen Leitung können auch miteinander kombiniert werden.

In einer anderen Ausführungsform umfasst die Kopplung zwischen dem ersten und zweiten Element eine Kopplung über ein elektrisches, magnetisches und/oder elektromagnetisches Feld.

Die Kopplung und deren Nutzung zur Bestimmung bzw. Erfassung eines Versatzes setzen keinen elektrischen Kontakt zwischen den Elementen voraus.

Es ist insbesondere möglich, ein elektrisches, ein magnetisches und/oder ein elektromagnetisches Feld zur Bestimmung bzw. Erfassung der Versatzes zu nutzen, wenn dieses Feld bzw. diese Felder in einer Weise eingesetzt werden, eine Relativbewegung (bzw. deren Ergebnis) zwischen den Elementen erkennbar machen.

In einer Ausgestaltung dieser Ausführungsform weist das erste Element einen Reed-Schalter auf und umfasst das zweite Element einen Magneten und/oder eine Magnetspule.

Der Reed-Schalter reagiert in empfindlicher Weise auf eine Annährung eines Magneten bzw. die Präsenz eines Magnetfeldes, wobei die relative Position zwischen den Elementen dazu führt, dass der Reed-Schalter entweder geöffnet bleibt oder geschlossen wird. In einer Variante ist der Magnet bzw. die Magnetspule so angeordnet, dass erst bei einem übermäßigen Versatz der Reed-Schalter geöffnet wird, so dass der geschlossene Schalter auch als Funktionsprüfung dienen kann. In einer komplexeren Anordnung kann die Magnetspule selbst ohne Versatz für ein Öffnen und Schließen des Reed-Schalter angesteuert werden, so dass eine vollständigere Funktionsprüfung erreicht werden kann. In einer anderen Ausgestaltung der obigen Ausführungsform weisen das erste Element und das zweite Element jeweils eine Spule aus einem Spulenpaar auf, und/oder weisen das erste Element und das zweite Element jeweils eine Elektrode eines Kondensators auf, und/oder weisen das erste Element und das zweite Element eine Antenne und ein parasitäres Antennenelement auf.

Bei einem Spulenpaar wird der Versatz über eine vom Abstand der Spulen abhängige induktive Kopplung zugänglich. Die Eigenschaften des Kondensators hängen ebenfalls vom Abstand der Elektroden ab, so dass auch hier mit einfachen Mitteln eine Messung eines Versatzes möglich wird. Auch die relative Position von Antenne und parasitärem Antennenelement wirkt sich auf die Antenneneigenschaften (z.B. Fußpunktimpedanz) aus.

In einer weiteren Ausführungsform umfasst die Kopplung zwischen dem ersten und zweiten Element einen Dehnungsmessstreifen, der insbesondere für eine Anordnung entlang und/oder quer zu einer Versatzrichtung ausgestaltet ist.

Ein Dehnungsmessstreifen erlaubt in einfacher Weise eine zumindest im Grunde stufenlose Messung, so dass hier auch der zeitliche Verlauf des Versatzes über die Betriebsdauer nachvollzogen werden kann. Durch die quantitative Angabe besteht zudem die Möglichkeit, beispielsweise eine Vielzahl von "Alarm-Stufen" oder einen Maßnahmenkatalog vorzusehen, die zudem ebenfalls kontinuierliche Aspekte auf Basis der Anzeige des Dehnungsmessstreifens aufweisen können.

Werden zwei im wesentlichen gleiche Dehnungsmessstreifen verwendet, wobei der eine dem Versatz gegenüber empfindlich und der andere im Wesentlichen unempfindlich gegenüber dem Versart angebracht werden, kann eine Kompensation etwa eines Temperatureinflusses erfolgen, da die Wirkung des Versatzes durch Vergleich zwischen den Signalen der Dehnungsmessstreifen von einer Temperatureinwirkung unterschieden werden kann.

Bevorzugte Ausführungsformen der Erfindung sind insbesondere in den abhängigen Ansprüchen definiert, wobei zu verstehen ist, dass die erfindungsgemäße Vorrichtung, das erfindungsgemäße System, das erfindungsgemäße Verfahren und die erfindungsgemäße Verwendung ähnliche und/oder identische bevorzugte Ausführungsformen aufweisen. Weitere bevorzugte Ausführungsformen ergeben sich aus Kombinationen der einzelnen Unteransprüche, soweit die verschiedenen Ausführungsformen und Ausgestaltungen miteinander kombinierbar sind.
Im Folgenden wird die Erfindung anhand von Ausführungsbeispielen unter Bezug auf die beiliegenden Figuren erläutert. Hierbei zeigen:
- Fig. 1: eine schematische Darstellung eines Radsatzes mit Radreifenbestückung, bei dem die vorliegende Erfindung eingesetzt werden kann,
- Fig. 2: eine schematische Darstellung einer beispielhaften Vorrichtung,
- Fig. 3: eine schematische Darstellung einer beispielhaften Vorrichtung,
- Fig. 4: eine schematische Darstellung einer beispielhaften Vorrichtung,
- Fig. 5: eine schematische Darstellung einer beispielhaften Vorrichtung,
- Fig. 6: eine schematische Darstellung einer beispielhaften Verwendung eines RFID-Transponders;
- Fig. 7: eine schematische Darstellung eines Ausführungsbeispiels des erfindungsgemäßen Systems,
- Fig. 8: ein Ablaufdiagramm eines Ausführungsbeispiels des erfindungsgemäßen Verfahrens,
- Fig. 9: eine schematische Darstellung eines leitenden Bleches als Beispiel einer elektrischen Leitung der erfindungsgemäßen Vorrichtung und
- Fig. 10: eine schematische Schnittansicht des Bleches aus Fig. 9 an zwei Bauteilen.

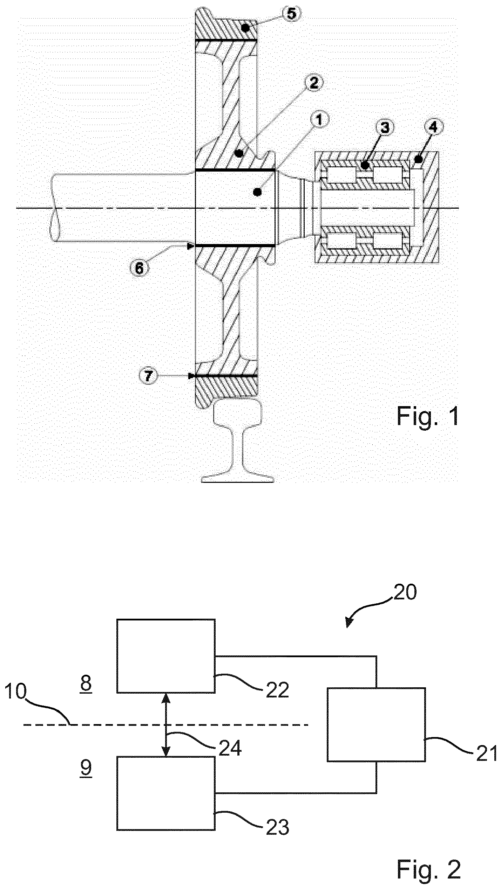

Fig. 1 zeigt eine schematische Darstellung eines Radsatzes mit Radreifenbestückung in Schnittdarstellung, bei dem die vorliegende Erfindung eingesetzt werden kann.
Auf der Radsatzwelle 1 ist eine Radscheibe 2 aufgepresst. Die Radsatzwelle 1 ist über ein Wälzlager 3 in einem Lagergehäuse 4 gelagert. Auf die Radscheibe 2 ist wiederum ein Radreifen 5 aufgepresst. Somit ergeben sich zwei Presssitze: Zwischen Radsatzwelle 1 und Radscheibe 2 besteht ein erster Presssitz 6 und zwischen Radscheibe 2 und Radreifen 5 ein zweiter Presssitz 7.

Diese Presssitze 6, 7 können erfindungsgemäße mit einer erfindungsgemäßen Vorrichtung bzw. einem entsprechenden Verfahren auf einen Versatz im Betrieb hin geprüft und überwacht werden.

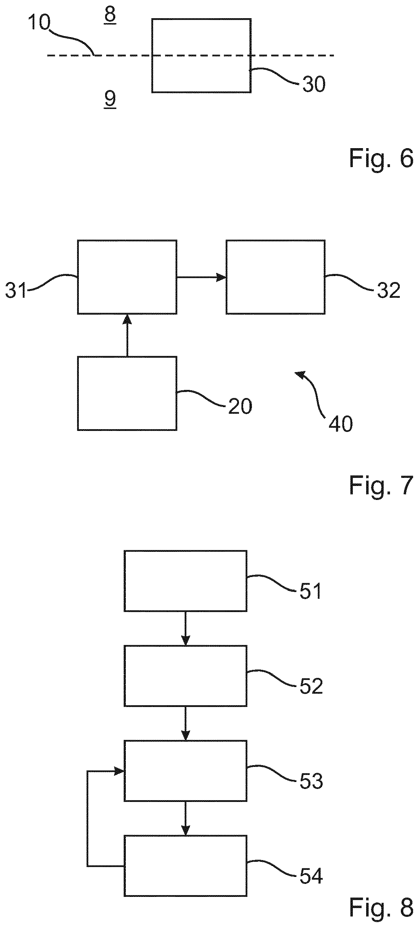

Fig. 2 zeigt eine schematische Darstellung einer beispielhaften Vorrichtung.
An zwei Bauteilen 8, 9, die beispielsweise mit einer Presssitzpassung 10 verbunden sind, wird eine erfindungsgemäße Vorrichtung 20 so angeordnet, dass bei Verdrehungs- / Verlagerungsvorgängen zwischen der Bauteilpaarung eine Veränderung an der Vorrichtung 20 stattfindet. Die Vorrichtung 20 umfasst einen RFID-Transponder 21, der zusätzlich zur bekannten Möglichkeit der Daten-Speicherung höhere Funktionen aufweist. Dieser Transponder 21 ist einer Sensoranordnung mit einem ersten Element 22, einem zweiten Element 23 und einer Kopplung 24 zwischen diesen Elementen 22, 23 verbunden. Der RFID-Transponder erfasst den aktuellen Zustand der Sensoranordnung und ggf. eine Zustandsänderung, und leitet die Information drahtlos per Funk an ein RFID-Lesegerät (hier nicht gezeigt, siehe Fig. 7) weiter.
Die Vorrichtung 20 mit Transponder 21 und angeschlossener Sensoranordnung funktioniert im passiven Modus, d.h. der Transponder bezieht seine Energie aus dem Strahlungsfeld des RFID-Lesegerätes. Damit ist die Vorrichtung 20 wartungsfrei.
Das Auslesen des Sensor Zustandes erfolgt beispielsweise bei Vorbei-Fahrt an mehreren definierten Mess-Stellen, die jeweils mit einem RFID-Lesegerät ausgestattet sind.
Für die Vorrichtung ergeben sich bei einer vorteilhaften praktischen Implementierung insbesondere die folgenden technischen Merkmale:
Der Transponder ist ein passives Bauteil, welches robust ausgeführt ist, damit es die vorherrschenden Umgebungsbedingungen in Form von Temperatur, Erschütterungen, Fliehkräften, Feuchtigkeit, Spritzwasser, chemischen Lösungsmitteln, Fremdkörpereinwirkungen und EMV-Einflüssen ohne Funktionseinschränkung übersieht.
Die Sensoranordnung wird über der potenziellen Trennstelle so angeordnet wird, dass sie sich bei Verdreh- / Verschiebebewegungen verändert bzw. einen Kontaktverlust erleidet. Dies kann als abweichende Messgröße interpretiert werden.

Bei der Sensoranordnung bzw. deren Kopplung 24 handelt es sich um einen Bruchsensor, der bei Verschiebungs- / Verdreh-Bewegung eine elektrisch leitende Verbindung unterbricht. Eine weitere mögliche Form ist der ergänzende Einsatz eines Reed-Relais, montiert auf der einen Seite des Presssitzes, sowie einem magnetischem Gegenstück auf der gegenüberliegenden Seite des Presssitzes, der bei Verdrehung des Magneten, seinen Kontakt schließt / öffnet.

Die Sensoranordnung ist so an den beiden zu überwachenden Bauteilen angebracht (z.B. durch Kleben, Klemmen, Heften, Schrauben, Einbetten, usw.), dass eine mechanische Veränderung (Verschiebungs- / Verdreh-Bewegung) zur Änderung des Zustandes des Sensoranordnung und damit auch des Transponder-Signals führt.

Mit der Vorbeifahrt des Transponders an einem RFID Lesegerät, wird neben dem Sensor-Zustand, eine Transponder-Kennung (ID) ausgelesen und abgespeichert, mit der eine eindeutige Zuordnung zum Fahrzeug/Radsatz bzw. Rad gegeben ist.

Veränderungen bzw. Ausfälle der Transponderkennung gestatten Rückschlüsse auf veränderte mechanische Integrität der überwachten Bauteile und lösen entsprechende Kontroll- und Instandhaltungsmaßnahmen am Objekt aus.

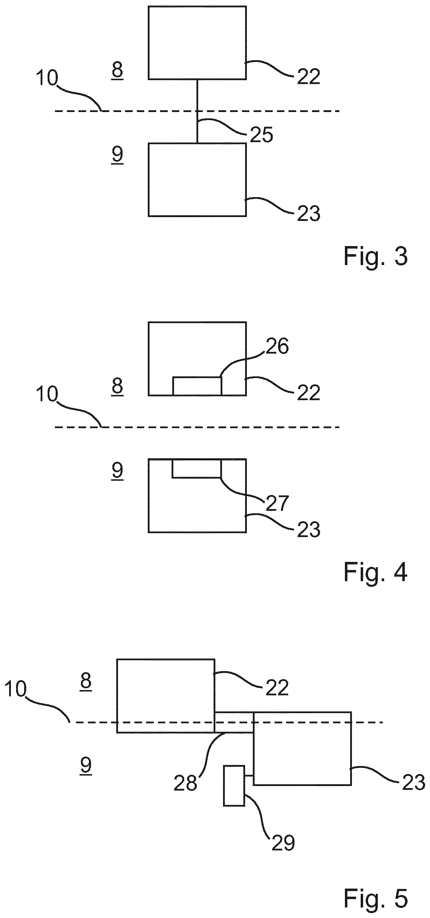

In den Fig. 3 bis 5 werden als Gründen der Übersichtlichkeit jeweils nur die Elemente 22, 23 der Vorrichtung und die Kopplung über die Trennstelle 10 der Bauteile 8, 9 dargestellt.

Fig. 3 zeigt eine schematische Darstellung einer beispielhaften Vorrichtung.

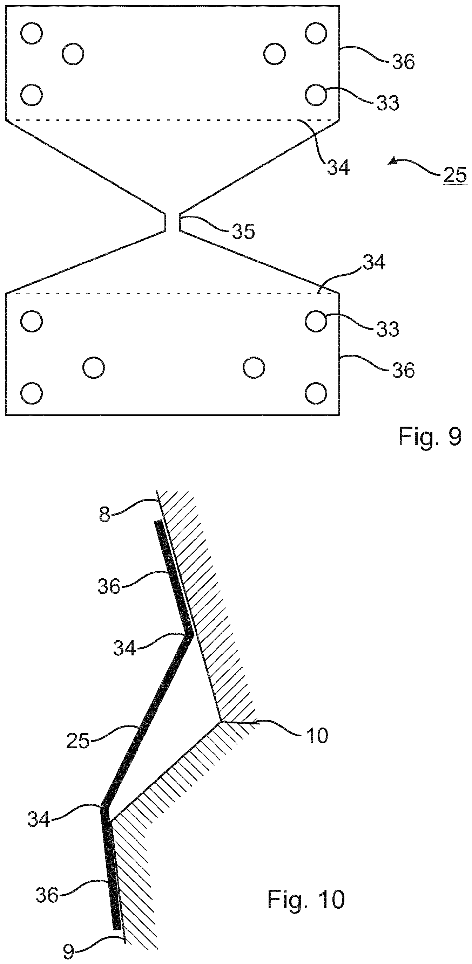

Die Elemente 22, 23 sind jeweils auf einem der Bauteile 8, 9 angebracht, wobei die Elemente 22, 23 durch eine elektrische Leitung 25 in Form eines geformten Bleches (siehe unten, Fig. 9 und 10) miteinander gekoppelt sind. Erfolgt ein Versatz (Verschiebung relativ zwischen den Bauteilen nach rechts bzw. links in der Darstellung von Fig. 3) zwischen den Bauteilen 8, 9, so wird das Blech 25 zerstört.

Fig. 4 zeigt eine schematische Darstellung einer beispielhaften Vorrichtung.

Auf bei diesem Aspekt sind die Elemente 22, 23 auf den Bauteilen 8, 9 angebracht, und zwar so, dass sich ein Reed-Schalter 26 des Elements 22 in einem Zustand ohne Versatz (hier dargestellt) gegenüber einem Magneten 27 des Elements 23 befindet.
Wenn sich die Bauteile 8, 9 relativ zueinander entlang des Presssitzes 10 bewegen, es also zu einem Versatz kommt, wird der Magnet 27 vom Reed-Schalter 26 entfernt, der damit geöffnet wird, so dass der Versatz für die Vorrichtung erkennbar wird.

Fig. 5 zeigt eine schematische Darstellung einer beispielhaften Vorrichtung.
Die Elemente 22, 23 sind durch einen Dehnungsmessstreifen 28 miteinander verbunden und so auf den Bauteilen 8, 9 angebracht, dass jeweils ein Element 22, 23 mit einem der Bauteile 8, 9 fest verbunden ist (z.B. angeklebt ist). Ein jeweiliger Teil der Elemente 22, 23 erstreckt sich zwar in den Bereich des jeweils anderen Bauteils 8, 9, ist aber dort nicht befestigt. Der Dehnungsmessstreifen 28 ist nur an den Elementen 22, 23, nicht aber an den Bauteilen 8, 9 befestigt. Zusätzlich weist dieser Aspekt einen weiteren Dehnungsmessstreifen 29 auf, der nicht direkt in die Erfassung des Versatzes involviert ist. Da Temperaturschwankungen und andere Einflüsse gemeinsam auf die Dehnungsmessstreifen 28, 29 wirken, kann der Versatz, der lediglich auf den Dehnungsmessstreifen 28 wirkt, aus der Signaldifferenz der Dehnungsmessstreifen 28, 29 bestimmt werden.

Fig. 6 zeigt eine schematische Darstellung eines Beispiels, das zum Verständnis der vorliegenden Erfindung nützlich ist.
Ein RFID-Transponder 30 über einem Presssitz 10 (als Beispiel einer Fügestelle) zwischen zwei Bauteilen 8, 9 mit den beiden Bauteilen 8, 9 fest verbunden, etwa daran angeklebt.
Ein über ein vorbestimmtes Maß hinaus auftretender Versatz zwischen den Bauteilen 8, 9 wird den RFID-Transponder 30 zerstören. Aus der dann nicht mehr erfolgenden Rückmeldung auf eine Anfrage kann der entsprechende Versatz geschlossen werden.
Alternativ kann der Versatz den RFID-Transponder in vorbestimmter Weise so verändern, dass ein Maß des Versatzes einer Signalantwort des RFID-Transponders zu entnehmen ist. Dies kann auch in einer teilweisen Zerstörung des RFID-Transponder begründet sein, beispielsweise durch ein selektives Zerreißen eines Teils des RFID-Transponders ohne die Gesamtfunktion zu beseitigen.

Fig. 7 zeigt eine schematische Darstellung eines Ausführungsbeispiels des erfindungsgemäßen Systems.

Das System 40 umfasst in der Praxis eine Vielzahl von erfindungsgemäßen Vorrichtungen 20, eine Vielzahl von Empfangseinheiten 31, die jeweils einen von der Übermittlungseinheit der Vorrichtung(en) 20 kontaktlos übermittelten Zustand der Kopplung und/oder ein von der Übermittlungseinheit der Vorrichtungen (20) kontaktlos übermitteltes Maß der Kopplung empfangen und ein entsprechendes Signal ausgeben, und eine Vielzahl von Auswerteeinheiten 32, die auf Basis eines von der Empfangseinheit ausgegebenen Signals eine Bewertung des Versatzes zwischen den Bauteilen vornehmen (hier jeweils nur einzeln dargestellt).

Bei einer Umsetzung, bei der die Übermittlungseinheit ein RFID-Transponder ist, kann die Empfangseinheit als RFID-Reader 31 betrachtet werden.

Das Datenhandling basiert darauf, dass der am Transponder anstehende Zustand mittels einer am Reader 31 angeschlossenen Antenne ausgelesen wird. Die Reader-Antennen-Einheit kann dabei sowohl mitfahrend am Fahrzeug verbaut sein oder als örtlich gebundene Festinstallation ausgeführt sein.

An den Reader 31 angeschlossen ist eine lokale Rechner-Einheit 32, welche die an den Transpondern anstehenden Zustände in Verbindung mit der spezifischen Transponder-ID den einzelnen Fahrzeugen, Drehgestellen, Radsätzen und Einzelrädern zuordnet und in eine entsprechende Datenbank übergibt. Bei Verwendung von mehreren Reader-Einheiten 31 sind die lokalen Rechnereinheiten 32 per Netzwerk (nicht dargestellt) verbunden und geben die ausgelesenen Zustände direkt an eine zentrale Rechner-Einheit (nicht dargestellt) weiter, auf der dann die Zuordnung und Datenbankeintragung erfolgt.

Parallel zur Erfassung werden die jeweiligen Zustände ausgewertet. Potentielle Verdrehungen und fehlende Transponder werden z.B. per Relaismeldung angezeigt.

Fehlalarme aufgrund vollständig übertragener Datenpakete sind aufgrund der binären Zustandserfassung ausgeschlossen. Um jedoch Falschmeldungen aufgrund unvollständiger oder nicht übertragener Datenpakete zu vermeiden, werden für das Absetzen einer Alarmmeldung vorzugsweise mehrere Auslesezyklen mit identischem Ergebnis (d.h. Erkennen von Versatz) vorausgesetzt.
Fig. 8 zeigt ein Ablaufdiagramm eines Ausführungsbeispiels des erfindungsgemäßen Verfahrens.
Das Verfahren zum Erfassung eines Versatzes zwischen zwei Bauteilen umfasst zunächst einen ersten Anbringschritt 51 des Anbringens eines ersten Elements an einem der Bauteile und einen zweiten Anbringschritt 52 des Anbringen eines zweiten Elements am anderen der Bauteile. Das Anbringen des ersten und zweiten Elements erfolgt so, dass das erste und zweite Element über eine Fügestelle der Bauteile hinweg miteinander derart gekoppelt sind, dass ein Versatz die Kopplung beeinflusst. Im folgenden Erfassungsschritt 53 wird ein Zustands und/oder ein Maßes der Kopplung erfasst, wobei in einem Übermittlungsschritt 54 ein kontaktloses Übermitteln de erfassten Zustands und/oder Maßes der Kopplung erfolgt. Die Übermittlung kann auch eine Negativ-Aussage beinhalten, etwa in der Form, dass die Übermittlung solange erfolgt, wie der vorbestimmte Versatz noch nicht eingetreten ist, während der vorbestimmte Versatz beispielsweise durch eine Zerstörung der Vorrichtung dazu führt, dass keine weitere Übermittlung mehr stattfindet.

Fig. 9 zeigt eine schematische Darstellung eines leitenden Bleches der elektrischen Leitung als einem Aspekt des Ausführungsbeispiels der erfindungsgemäßen Vorrichtung.

Wie schon oben mit Bezug auf Fig. 3 angemerkt, ist die elektrische Leitung, deren Bruch einen Versatz über ein vorbestimmtes Maß hinaus anzeigt, auch durch ein geeignet geformtes Blech realisiert werden.
Ein derartiges Blech 25 ist in Fig. 9 gezeigt. Das Blech 25 umfasst zwei flächige Befestigungsbereiche 36, die hier mit Löchern 33 für eine Vernietung oder ähnliches gezeigt sind. Anstelle oder ergänzend zu einer derartigen mechanischen Verbindung können die Befestigungsbereiche 36 auch an den Bauteilen (siehe Fig. 10) angeklebt werden. In diesem Fall können die Löcher 33 als Montagehilfe oder zur Sicherstellung einer nichtleitenden Verbindung zum jeweiligen Bauteil dienen.
Zwischen den Befestigungsbereichen 36 weist das Blech 25 eine Einschnürung 35 auf, an der der Querschnitt des Blechs soweit reduziert ist, dass ein Versatz zwischen den Befestigungsbereichen 36 (und damit zwischen den Bauteilen) zu einem Bruch der Einschnürung und damit zu einer Unterbrechung der elektrischen Leitung führt.

Vorliegend ist die Versatzrichtung quer zur Einschnürung 35 orientiert (siehe Fig. 10), wobei aber auch andere Ausrichtungen möglich sind.

Das Blech 25 umfasst zwei Knickstellen 34, wie dies auch in Fig. 10 gezeigt ist. Das Blech 25 ist somit nicht auf Fälle beschränkt, bei denen die Bauteile miteinander in Flucht angeordnet sind. Dieses Beispiel ist allerdings nicht als Beschränkung zu verstehen, da auch andere Ausformungen des Blechs möglich sind, um das Blech 25 an die Geometrie der Bauteile anzupassen. Insbesondere ist es nicht notwendigerweise der Fall, dass die Bestandteile des Blechs als solche eben wären, da vor allem die Befestigungsbereiche 36 an die Konturen der Bauteile (entweder durch vorheriges Formen oder erst im Rahmen der Befestigung) angepasst werden können.

Fig. 10 zeigt eine schematische Schnittansicht des Bleches 25 aus Fig. 9 an zwei Bauteilen 8, 9. Die Bauteile 8, 9 weisen eine Fügestelle 10 auf, wobei das Blech 25 mit Hilfe der Befestigungsbereiche 36 an den Bauteilen 8, 9 so befestigt ist, dass sich der Zwischenbereich und insbesondere die Einschnürung (in Fig. 10 nicht gezeigt) über die Fügestelle erstrecken.

Die Befestigungsbereiche 36 liegen zumindest teilweise an den Bauteilen 8, 9 an, wobei das Blech 25 Knickstellen 34 aufweist, so dass das Blech 25 als Ganzes im Grunde der Gesamtkontur der Kombination der Bauteile 8, 9 folgt.

Es kann insbesondere vorgesehen sein, dass die Knickstellen 34 (oder auch andere Bereiche des Blechs 25) im Einbauzustand eine mechanische Spannung aufweisen. Bei einer gleichsinnigen oder auch gegensinnigen Spannung in beiden Knickstellen 34 wird die jeweilige Spannung im Fall eines Bruchs der Einschnürung abgebaut, wobei sich die Bruchstellen infolge des Spanungsabbaus voneinander entfernen. Beispielsweise könnten sich die einzelnen und infolge des Bruchs voneinander getrennten Teile zwischen den Knickstellen 34 im Uhrzeigersinn oder gegen den Uhrzeigersinn (in Fig. 10) bewegen, um so eine zusätzliche räumliche Trennung im Fall des Bruchs der Einschnürung zu erreichen.

Knickstellen 34 im Uhrzeigersinn oder gegen den Uhrzeigersinn (in Fig. 10) bewegen, um so eine zusätzliche räumliche Trennung im Fall des Bruchs der Einschnürung zu erreichen.

## Patentansprüche

1. Vorrichtung (20) zur Erfassung eines Versatzes zwischen zwei gefügten Bauteilen (8, 9) im Betrieb der Bauteile (8, 9), mit:
einem ersten Element (22), das zum Anbringen an einem der Bauteile (9) vorgesehen ist, und einem zweiten Element (23), das zum Anbringen am anderen der Bauteile (8) vorgesehen ist,
wobei das erste und zweite Element (22, 23) über eine Fügestelle (10) der Bauteile (8, 9) hinweg miteinander derart gekoppelt und/oder koppelbar sind, dass ein Versatz deren Kopplung (24) beeinflusst,
wobei die Vorrichtung (20) ferner eine Übermittlungseinheit (21) aufweist, die ausgestaltet ist, einen Zustand und/oder ein Maß der Kopplung (24) kontaktlos zu übermitteln,
**gekennzeichnet dadurch, dass** die Kopplung (24) zwischen dem ersten und zweiten Element (22, 23) eine elektrische Leitung (25) umfasst, die für eine Unterbrechung durch einen Versatz, der über ein vorbestimmtes Maß hinausgeht, ausgestaltet ist,
wobei die elektrische Leitung (25) ein leitendes Blech mit zwei Befestigungsbereichen (36) für eine jeweilige Befestigung an einem der Bauteile (8, 9) und einer zwischen den Befestigungsbereichen (36) befindlichen Einschnürung (35) aufweist, wobei die Einschnürung (35) für einen Brechen im Fall eines Versatzes ausgestaltet ist, der über das vorbestimmte Maß hinausgeht.

2. Vorrichtung (20) nach Anspruch 1,
wobei die Übermittlungseinheit (21) einen passiven RFID-Transponder (21) zur kontaktlosen Übermittlung umfasst.

3. Vorrichtung (20) nach einem der vorstehenden Ansprüche,
wobei die Kopplung (24) elektrische Leitungsteile aufweist, die durch einen Versatz, der über ein vorbestimmtes Maß hinausgeht, miteinander in Kontakt bringbar sind.

4. Vorrichtung (20) nach Anspruch 1,
wobei die Kopplung (24) mehrere elektrische Leitungen umfasst, die jeweils für eine Unterbrechung bei einem Versatz, der über ein unterschiedliches zugehöriges Maß hinausgeht, ausgestaltet sind.

5. Vorrichtung (20) nach einem der Ansprüche 2 oder 3,
wobei die Kopplung (24) drei oder mehr elektrische Leitungsteile umfasst, von denen mindestens zwei durch einen Versatz, der über ein vorbestimmtes Maß hinausgeht, miteinander in Kontakt bringbar sind.

6. Vorrichtung (20) nach einem der vorstehenden Ansprüche,
wobei die Kopplung (24) zwischen dem ersten und zweiten Element eine Kopplung über ein elektrisches, magnetisches und/oder elektromagnetisches Feld umfasst.

7. Vorrichtung (20) nach Anspruch 6,
wobei das erste Element (22) einen Reed-Schalter (26) aufweist und das zweite Element (23) einen Magneten (27) und/oder eine Magnetspule umfasst.

8. Vorrichtung (20) nach Anspruch 6, wobei
das erste Element (22) und das zweite Element (23) jeweils eine Spule aus einem Spulenpaar aufweisen, und/oder
das erste Element (22) und das zweite Element (23) jeweils eine Elektrode eines Kondensators aufweisen, und/oder
das erste Element (22) und das zweite Element (23) eine Antenne und ein parasitäres Antennenelement aufweisen.

9. Vorrichtung (20) nach einem der vorstehenden Ansprüche,
wobei die Kopplung (24) zwischen dem ersten und zweiten Element einen Dehnungsmessstreifen (28) umfasst.

10. Vorrichtung (20) nach Anspruch 9, wobei der Dehnungsmessstreifen (28) für eine Anordnung entlang und/oder quer zu einer Versatzrichtung ausgestaltet ist.

11. System (40) zur Überwachung eines Versatzes zwischen zwei gefügten Bauteilen (8, 9) im Betrieb der Bauteile (8, 9), mit:
wenigstens einer Vorrichtung (20) zur Erfassung des Versatzes nach einem der vorstehenden Ansprüche,
einer Empfangseinheit (31), die ausgestaltet ist, einen von der Übermittlungseinheit (21) einer Vorrichtung (20) kontaktlos übermittelten Zustand der Kopplung (24) und/oder ein von der Übermittlungseinheit (21) einer Vorrichtung (20) kontaktlos übermitteltes Maß der Kopplung (24) zu empfangen und ein entsprechendes Signal auszugeben, und
einer Auswerteeinheit (32), die ausgestaltet ist, auf Basis eines von der Empfangseinheit (31) ausgegebenen Signals eine Bewertung des Versatzes zwischen den Bauteilen (8, 9) vorzunehmen.

12. Verfahren zur Erfassung eines Versatzes zwischen zwei gefügten Bauteilen (8, 9) im Betrieb der Bauteile (8, 9), mit:
Anbringen (51) eines ersten Elements (22) an einem der Bauteile (8),
Anbringen (52) eines zweiten Elements (23) am anderen der Bauteile (9),
wobei das Anbringen (51, 52) des ersten und zweiten Elements (22, 23) so erfolgt, dass das erste und zweite Element (22, 23) über eine Fügestelle (10) der Bauteile (8, 9) hinweg miteinander derart gekoppelt sind, dass ein Versatz deren Kopplung (24) beeinflusst,
Erfassen (53) eines Zustands und/oder eines Maßes der Kopplung (24) und
kontaktloses Übermitteln (54) des erfassten Zustands und/oder Maßes der Kopplung (24),
**gekennzeichnet dadurch, dass** die Kopplung (24) zwischen dem ersten und zweiten Element (22, 23) eine elektrische Leitung (25) umfasst, die für eine Unterbrechung durch einen Versatz, der über ein vorbestimmtes Maß hinausgeht, ausgestaltet ist,
wobei die elektrische Leitung (25) ein leitendes Blech mit zwei Befestigungsbereichen (36) für eine jeweilige Befestigung an einem der Bauteile (8, 9) und einer zwischen den Befestigungsbereichen (36) befindlichen Einschnürung (35) aufweist, wobei die Einschnürung (35) für einen Brechen im Fall eines Versatzes ausgestaltet ist, der über das vorbestimmte Maß hinausgeht.

13. Verfahren nach Anspruch 12, wobei die gefügten Bauteile (8, 9) pressgefügt sind.

## Claims

1. A device (20) for detecting an offset between two joined components (8, 9) during operation of said components (8, 9), comprising:
a first element (22), which is provided for attaching to one of the components (9), and a second element (23), which is provided for attaching to the other of the components (8),
wherein the first and the second element (22, 23) are coupled and/or can be coupled to each other across a joining point (10) of the components (8, 9) such that an offset influences their coupling (24),
wherein the device (20) furthermore comprises a transmission unit (21), which is designed to contactlessly transmit a state and/or a dimension of the coupling (24),
**characterized in that** the coupling (24) between the first and the second element (22, 23) comprises an electrical line (25), which is designed to be interrupted by an offset which exceeds a predetermined amount,
wherein the electrical line (25) comprises a conductive plate with two attachment regions (36) for respective attachment to one of the components (8, 9), and a constriction (35) located between the attachment regions (36), wherein the constriction (35) is designed to break in the event of an offset which exceeds a predetermined amount.

2. The device (20) according to claim 1,
wherein the transmission unit (21) comprises a passive RFID transponder (21) for contactless transmission.

3. The device (20) according to any one of the preceding claims,
wherein the coupling (24) comprises electrically conductive parts which can be brought into contact with each other by an offset which exceeds a predetermined amount.

4. The device (20) according to claim 1,
wherein the coupling (24) comprises a plurality of electrical lines which are each designed to be interrupted in the event of an offset which exceeds a different associated amount.

5. The device (20) according to any one of claims 2 or 3,
wherein the coupling (24) has three or more electrically conductive parts, of which at least two can be brought into contact with each other by an offset which exceeds a predetermined amount.

6. The device (20) according to any one of the preceding claims,
wherein the coupling (24) between the first and the second element comprises a coupling by means of an electrical, magnetic and/or electromagnetic field.

7. The device (20) according to claim 6,
wherein the first element (22) comprises a Reed switch (26) and the second element (23) comprises a magnet (27) and/or a magnetic coil.

8. The device (20) according to claim 6, wherein
the first element (22) and the second element (23) each comprise one coil from a pair of coils, and/or
the first element (22) and the second element (23) each comprise an electrode of a capacitor, and/or
the first element (22) and the second element (23) comprise an antenna and a parasitic antenna element.

9. The device (20) according to any one of the preceding claims,
wherein the coupling (24) between the first and the second element comprises a strain gauge (28).

10. The device (20) according to claim 9, wherein the strain gauge (28) is designed for arrangement along and/or transverse to the offset direction.

11. A system (40) for monitoring an offset between two joined components (8, 9) during operation of said components (8, 9), comprising:
at least one device (20) for detecting an offset, according to any one of the preceding claims,
a receiver unit (31), which is adapted to receive a state of the coupling (24) transmitted contactlessly by the transmission unit (21) of a device (20) and/or to receive a dimension of the coupling (24) transmitted contactlessly by the transmission unit (21) of a device (20) and to output a corresponding signal, and
an evaluation unit (32), which is adapted to evaluate the offset between the components (8, 9) on the basis of a signal outputted by the receiver unit (31).

12. A method for detecting an offset between two joined components (8, 9) during operation of said components (8, 9), comprising the steps of:
attaching (51) a first element (22) to one of the components (8),
attaching (52) a second element (23) to the other of the components (9),
wherein the first and the second element (22, 23) are attached (51, 52) in such a way that the first and the second element (22, 23) are coupled to each other across a joining point (10) of the components (8, 9) such that an offset influences the coupling (24),
detecting (53) a state and/or a dimension of the coupling (24), and
contactlessly transmitting (54) the detected state and/or dimension of the coupling (24),
**characterized in that** the coupling (24) between the first and the second element (22, 23) comprises an electrical line (25), which is designed to be interrupted by an offset which exceeds a predetermined amount,
wherein the electrical line (25) comprises a conductive plate with two attachment regions (36) for respective attachment to one of the components (8, 9), and a constriction (35) located between the attachment regions (36), wherein the constriction (35) is designed to break in the event of an offset which exceeds a predetermined amount.

13. The method according to claim 12, wherein the joined components (8, 9) are pressjoined.

## Revendications

1. Dispositif (20) servant à détecter un décalage entre deux composants (8, 9) assemblés lors du fonctionnement des composants (8, 9), avec :
un premier élément (22), qui est prévu pour être installé au niveau d'un des composants (9), et un deuxième élément (23), qui est prévu pour être installé au niveau de l'autre des composants (8),
dans lequel le premier et le deuxième élément (22, 23) sont couplés et/ou peuvent être couplés l'un à l'autre au-delà d'un emplacement d'assemblage (10) des composants (8, 9) de telle manière qu'un décalage influence leur couplage (24),
dans lequel le dispositif (20) présente en outre une unité de transmission (21), qui est configurée pour transmettre sans contact un état et/ou une mesure du couplage (24),
**caractérisé en ce que** le couplage (24) entre le premier et le deuxième élément (22, 23) comprend un câble (25) électrique, qui est configuré pour une interruption par un décalage, qui va au-delà d'une mesure prédéfinie,
dans lequel le câble (25) électrique présente une tôle conductrice avec deux zones de fixation (36) pour une fixation respective au niveau d'un des composants (8, 9) et un étranglement (35) se trouvant entre les zones de fixation (36), dans lequel l'étranglement (35) est configuré pour une rupture dans le cas d'un décalage, qui va au-delà de la mesure prédéfinie.

2. Dispositif (20) selon la revendication 1,
dans lequel l'unité de transmission (21) comprend un transpondeur RFID (21) passif servant à la transmission sans contact.

3. Dispositif (20) selon l'une quelconque des revendications précédentes,
dans lequel le couplage (24) présente des parties de câble électriques, qui peuvent être amenées en contact les unes avec les autres par un décalage, qui va au-delà d'une mesure prédéfinie.

4. Dispositif (20) selon la revendication 1,
dans lequel le couplage (24) comprend plusieurs câbles électriques, qui sont configurés respectivement pour une interruption dans le cas d'un décalage, qui va au-delà d'une mesure associée différente.

5. Dispositif (20) selon l'une quelconque des revendications 2 ou 3,
dans lequel le couplage (24) comprend trois parties de câble électriques ou plus, dont au moins deux peuvent être amenées en contact l'une avec l'autre par un décalage, qui va au-delà d'une mesure prédéfinie.

6. Dispositif (20) selon l'une quelconque des revendications précédentes,
dans lequel le couplage (24) entre le premier et le deuxième élément comprend un couplage par l'intermédiaire d'un champ électrique, magnétique et/ou électromagnétique.

7. Dispositif (20) selon la revendication 6,
dans lequel le premier élément (22) présente un interrupteur Reed (26) et le deuxième élément (23) comprend un aimant (27) et/ou une bobine magnétique.

8. Dispositif (20) selon la revendication 6, dans lequel
le premier élément (22) et le deuxième élément (23) présentent respectivement une bobine composée d'une paire de bobines, et/ou
le premier élément (22) et le deuxième élément (23) présentent respectivement une électrode d'un condensateur, et/ou
le premier élément (22) et le deuxième élément (23) présentent une antenne et un élément d'antenne parasitaire.

9. Dispositif (20) selon l'une quelconque des revendications précédentes,
dans lequel le couplage (24) entre le premier et le deuxième élément comprend une jauge de contrainte (28) .

10. Dispositif (20) selon la revendication 9, dans lequel la jauge de contrainte (28) est configurée pour un agencement le long d'une et/ou de manière transversale à une direction de décalage.

11. Système (40) servant à surveiller un décalage entre deux composants (8, 9) assemblés lors du fonctionnement des composants (8, 9), avec :
au moins un dispositif (20) servant à détecter le décalage selon l'une quelconque des revendications précédentes,
une unité de réception (31), qui est configurée pour recevoir un état, transmis sans contact par l'unité de transmission (21) d'un dispositif (20), du couplage (24) et/ou une mesure, transmise sans contact par l'unité de transmission (21) du dispositif (20), du couplage (24) et pour émettre un signal correspondant, et
une unité d'évaluation (32), qui est configurée pour entreprendre une évaluation du décalage entre les composants (8, 9) sur la base d'un signal émis par l'unité de réception (31).

12. Procédé servant à détecter un décalage entre deux composants (8, 9) assemblés lors du fonctionnement des composants (8, 9), avec :
l'installation (51) d'un premier élément (22) au niveau d'un des composants (8),
l'installation (52) d'un deuxième élément (23) au niveau de l'autre des composants (9),
dans lequel l'installation (51, 52) du premier et du deuxième élément (22, 23) est effectuée de telle sorte que le premier et le deuxième élément (22, 23) sont couplés l'un à l'autre au-delà d'un emplacement d'assemblage (10) des composants (8, 9) de telle manière qu'un décalage influence leur couplage (24) ;
la détection (53) d'un état et/ou d'une mesure du couplage (24) ; et
la transmission (54) sans contact de l'état détecté et/ou de la mesure du couplage (24),
**caractérisé en ce que** le couplage (24) entre le premier et le deuxième élément (22, 23) comprend un câble (25) électrique, qui est configuré pour une interruption par un décalage, qui va au-delà d'une mesure prédéfinie,
dans lequel le câble (25) électrique présente une tôle conductrice avec deux zones de fixation (36) pour une fixation respective au niveau d'un des composants (8, 9) et un étranglement (35) se trouvant entre les zones de fixation (36), dans lequel l'étranglement (35) est configuré pour une rupture dans le cas d'un décalage, qui va au-delà de la mesure prédéfinie.

13. Procédé selon la revendication 12, dans lequel les composants (8, 9) assemblés sont assemblés par pressage.
